(19) Europäisches Patentamt
European Patent Office
Office européen des brevets

(11) EP 3 578 249 B1

(12) **EUROPEAN PATENT SPECIFICATION**

(45) Date of publication and mention of the grant of the patent:
**30.11.2022 Bulletin 2022/48**

(21) Application number: **18747955.5**

(22) Date of filing: **31.01.2018**

(51) International Patent Classification (IPC):
***B01D 69/02*** (2006.01) ***B01D 69/12*** (2006.01)
***B01D 71/56*** (2006.01)

(52) Cooperative Patent Classification (CPC):
**B01D 69/125; B01D 71/56;** B01D 2323/30

(86) International application number:
**PCT/JP2018/003287**

(87) International publication number:
**WO 2018/143297 (09.08.2018 Gazette 2018/32)**

(54) **SEMIPERMEABLE COMPOSITE MEMBRANE AND METHOD FOR MANUFACTURING SEMIPERMEABLE COMPOSITE MEMBRANE**

SEMIPERMEABLE VERBUNDMEMBRAN UND VERFAHREN ZUR HERSTELLUNG EINER SEMIPERMEABLEN VERBUNDMEMBRAN

MEMBRANE COMPOSITE SEMI-PERMÉABLE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.01.2017 JP 2017015170**
**31.01.2017 JP 2017015169**

(43) Date of publication of application:
**11.12.2019 Bulletin 2019/50**

(73) Proprietor: **Toray Industries, Inc.**
**Tokyo 103-8666 (JP)**

(72) Inventors:
- **MINEHARA Hiroki**
  **Otsu-shi**
  **Shiga 520-8558 (JP)**
- **TANAKA Hiroaki**
  **Otsu-shi**
  **Shiga 520-8558 (JP)**
- **SUZUKI Monami**
  **Otsu-shi**
  **Shiga 520-8558 (JP)**
- **OGAWA Takafumi**
  **Otsu-shi**
  **Shiga 520-8558 (JP)**

(74) Representative: **Kador & Partner PartG mbB**
**Corneliusstraße 15**
**80469 München (DE)**

(56) References cited:

**EP-A1- 1 020 218**
**EP-A1- 1 157 734**
**EP-A1- 2 537 578**
**EP-A1- 2 540 385**
**EP-A2- 0 718 029**
**EP-A2- 1 707 255**
**WO-A1-99/01208**
**JP-A- H0 985 068**
**JP-A- H04 504 076**
**JP-A- H08 224 452**
**JP-A- 2000 015 067**
**JP-A- 2006 281 207**
**US-A1- 2015 283 515**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 578 249 B1

## Description

TECHNICAL FIELD

The present invention relates to a composite semipermeable membrane useful for selective separation of a liquid mixture. The composite semipermeable membrane obtained by the present invention can be suitably used for, for example, desalination of seawater or brackish water.

BACKGROUND ART

With regard to mixture separation, there are various techniques for removing substances (e.g., salts) dissolved in a solvent (e.g., water). Utilization of membrane separation techniques as a process for saving energy and saving resources has been expanding in recent years. Examples of the membrane used in the membrane separation techniques include a microfiltration membrane, an ultrafiltration membrane, a nanofiltration membrane, and a reverse osmosis membrane. These membranes are used for example, for obtaining drinking water from seawater, brackish water, water containing a harmful substance, etc., or for the production of industrial ultrapure water, wastewater treatments, recovery of valuables, etc.

In particular, with respect to the reverse osmosis membrane and nanofiltration membrane, a composite semipermeable membrane containing a crosslinked polyamide polymer as a separation active layer has been proposed. The polymerization method regarding the composite semipermeable membrane containing a crosslinked polyamide polymer as a separation active layer includes a method of performing the polymerization in the presence of an organic additive (Patent Literatures 1 and 2), a method of performing the polymerization in the presence of a monofunctional acid halide (Patent Literature 3), and a method of performing the polymerization in the presence of a partially hydrolyzed acid halide (Patent Literature 4).

CITATION LIST

PATENT LITERATURES

Patent Literature 1: JP-A-08-224452
Patent Literature 2: JP-A-6-47260
Patent Literature 3: JP-A-2014-521499
Patent Literature 4: WO 2010/120326

Further US 2015/283515 A1, EP 1 157 734 A1, EP 0 718 029 A2, EP 1 020 218 A1 and EP1707255A2 describe methods for forming polyamide thin film composite membranes and their resulting composite membranes.

SUMMARY OF INVENTION

TECHNICAL PROBLEM

However, according to the studies by the present inventors, the conventional composite semipermeable membranes above have a problem that the salt removal performance and water permeation performance are insufficient under low pressure conditions.

The present invention has been made in consideration of these conventional circumstances, and a problem to be solved is to provide a composite semipermeable membrane exhibiting high salt removal performance and water permeation performance even under low pressure conditions.

SOLUTION TO PROBLEM

The present invention to achieve the object above has the following constitutions.

[1] A composite semipermeable membrane, including a supporting membrane having a substrate and a microporous support layer, and a separation functional layer disposed on the microporous support layer, wherein the separation functional layer contains a crosslinked aromatic polyamide and comprises a thin film having a pleated structure including a plurality of convex parts and concave parts, whereby an average height of the convex parts in an electron

microscope image is 100 nm or more and 500 nm or less, and wherein the separation functional layer is formed on the microporous support layer by the steps including, (1) a substep of bringing an aqueous polyfunctional amine solution into contact with the microporous support layer, (2) a substep of, after the substep (1), bringing a solution containing an aliphatic carboxylic acid and a polyfunctional acid halide into contact with the microporous support layer, wherein the aliphatic carboxylic acid includes a linear or branched alkyl group and has 5 or more carbon atoms, and (3) a substep of bringing a solution containing a compound except for the aliphatic carboxylic acid in the substep (2) into contact with the microporous support layer after 5 seconds or more and 60 seconds or less from the start of the substep (2), wherein the compound is ethylene glycol ether and has an SP value of 7 $(cal/cm^3)^{1/2}$ or more and 15$(cal/cm^3)^{1/2}$ or less, and wherein the concentration of the compound in the solution containing the compound is 10 wt.% or less, and
in which the composite semipermeable membrane satisfies the following conditions (A) and (B):

(A) in a differential spectrum Sd obtained by subtracting an infrared absorption (IR) spectrum S2 of a surface on the separation functional layer side of the composite semipermeable membrane in the case of being equilibrated at a temperature of 25°C and a relative humidity of 11.3% RH from an infrared absorption (IR) spectrum S1 of the surface on the separation functional layer side of the composite semipermeable membrane in the case of being equilibrated at a temperature of 25°C and a relative humidity of 97.3% RH, a half width H of an absorption peak between 3,900 $cm^{-1}$ and 2,900 $cm^{-1}$ is 355 or more and 373 or less; and
(B) in the infrared absorption (IR) spectrum S1, a value F obtained by dividing an absorption intensity area between 3,900 $cm^{-1}$ and 2,900 $cm^{-1}$ by an absorbance of a peak top between 1,690 $cm^{-1}$ and 1,630 $cm^{-1}$ is 850 or more.

[2] The composite semipermeable membrane according to [1], in which: when the separation functional layer is measured by temperature modulated DSC method, the temperature at which an endothermic amount indicates 1/2 of a peak value of an irreversible endothermic amount at -10°C or more and 0°C or less in an initial temperature rise process is in a range of -5°C or more and -2°C or less; and an integral value of the irreversible endothermic amount is 200 J/g or more.
[3] The composite semipermeable membrane according to [2], in which the crosslinked aromatic polyamide is a polycondensate of metaphenylenediamine and trimesic acid chloride.
[4] The composite semipermeable membrane according to any one of [1] to [3], in which: in an electron microscope image of a cross-section at each of arbitrary 10 locations, having a length in a membrane surface direction of the composite semipermeable membrane being 2.0 μm, a standard deviation of a height of convex parts having a height of one fifth or more of a 10-point average surface roughness in the separation functional layer is 60 nm or less; and an average height of the convex parts in the electron microscope image is 100 nm or more and 500 nm or less.
[5] A method for producing the composite semipermeable membrane according to any one of [1] to [3], the method including a step of forming the separation functional layer on the microporous support layer,
in which the step includes:

(1) a substep of bringing an aqueous polyfunctional amine solution into contact with the microporous support layer,
(2) a substep of, after the substep (1), bringing a solution containing an aliphatic carboxylic acid and a polyfunctional acid halide into contact with the microporous support layer, wherein the aliphatic carboxylic acid includes a linear or branched alkyl group and has 5 or more carbon atoms and
(3) a substep of bringing a solution containing a compound except for the aliphatic carboxylic acid in the substep (2) into contact with the microporous support layer after 5 seconds or more and 60 seconds or less from the start of the substep (2), wherein the compound is ethylene glycol ether and has an SP value of 7 $(cal/cm^3)^{1/2}$ or more and 15 $(cal/cm^3)^{1/2}$ or less, and wherein the concentration of the compound in the solution containing the compound is 10wt.% or lss.

ADVANTAGEOUS EFFECTS OF INVENTION

The composite semipermeable membrane of the present invention satisfies the conditions (A) and (B) above, and thus the ratio between the amount of free water that weakly interacts with a polymer contained in the separation functional layer, and the amount of bound water that strongly interacts with the polymer and is low in permeability is appropriate. Consequently, the composite semipermeable membrane of the present invention can achieve both high salt removal performance and high water permeation performance.

BRIEF DESCRIPTION OF DRAWINGS

[Fig. 1] Fig. 1 illustrates an example of the spectrum of endothermic amount obtained by temperature modulated DSC method.

DESCRIPTION OF EMBODIMENTS

The present invention is described in detail below, but these indicate an example of preferred embodiments, and the present invention should not be construed as being limited to these contents.

Note that in the present description, "mass" and "weight" have the same meaning.

1. Composite Semipermeable Membrane

The composite semipermeable membrane of the present invention includes a supporting membrane having a substrate and a microporous support layer, and a separation functional layer disposed on the microporous support layer.

(1-1) Supporting Membrane

In the present invention, the supporting membrane has substantially no separation performance for ions, etc. and is intended to impart strength to the separation functional layer substantially having separation performance.

The pore of the supporting membrane is not particularly limited in its size or distribution, but, for example, it is preferable for the supporting membrane to have uniform micropores or micropores gradually increasing in the pore size from a surface on the separation functional layer-forming side to a surface on another side and have micropores having a pore size of 0.1 nm or more and 100 nm or less on the surface on the separation functional layer-forming side.

Examples of the substrate in the supporting membrane includes a fabric containing, as a main component, at least one selected from polyesters and aromatic polyamides.

As the fabric used for the substrate, a long-fiber nonwoven fabric or a short-fiber nonwoven fabric may be preferably used. For the reason that excellent film-forming properties making it possible to prevent a solution of a high-molecular polymer from excessively infiltrating to reach the back surface when the solution is cast on the substrate, prevent separation of the microporous support layer from the substrate, and furthermore, prevent the membrane from becoming non-uniform or generating a defect, such as pinhole, due to substrate fluffing, etc. are required, a long-fiber nonwoven fabric can be more preferably used.

Examples of the long-fiber nonwoven fabric include a long-fiber nonwoven fabric formed of a thermoplastic continuous filament.

As the material of the microporous support layer, homopolymers and copolymers, such as polysulfone, polyethersulfone, polyamide, polyester, cellulosic polymer, vinyl polymer, polyphenylene sulfide, polyphenylene sulfide sulfones, polyphenylene sulfone and polyphenylene oxide, may be used individually or as a blend.

Here, the cellulosic polymer that can be used includes cellulose acetate, cellulose nitrate, etc., and the vinyl polymer that can be used includes polyethylene, polypropylene, polyvinyl chloride, polyacrylonitrile, etc. Among these, homopolymers or copolymers, such as polysulfone, polyamide, polyester, cellulose acetate, cellulose nitrate, polyvinyl chloride, polyacrylonitrile, polyphenylene sulfide and polyphenylene sulfide sulfones, are preferred. Above all, a polysulfone, cellulose acetate, polyvinyl chloride, and a mixture thereof are preferably used, and it is particularly preferable to use a polysulfone that is highly stable chemically, mechanically and thermally.

Specifically, a polysulfone containing a repeating unit represented by the following chemical formula is preferred, because the pore diameter is easy to control and high dimensional stability is obtained.

[Chem. 1]

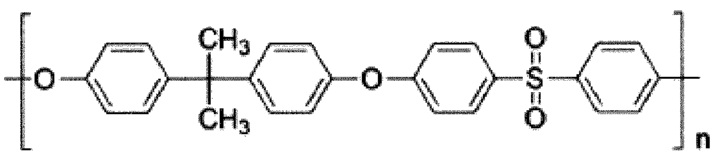

The thickness of the microporous support layer is preferably in the range of 10 to 200 μm, more preferably in the range of 20 to 100 μm. When the thickness of the microporous support layer is 10 μm or more, good pressure resistance is attained and at the same time, a uniform supporting membrane free of defects can be obtained. In turn, a composite semipermeable membrane including such a microporous support layer can exhibit good salt removal performance. When the thickness of the microporous support layer is 200 μm or less, the residual amount of unreacted substances during production does not increase, and the chemical resistance can be prevented from reduction due to a decrease in the amount of permeate.

The configuration of the microporous support layer can be observed by a scanning electron microscope, a transmission electron microscope, an atomic force microscope, etc. For example, in the case of observing by a scanning electron microscope, the substrate is peeled off from the composite semipermeable membrane, and the remaining microporous support layer (to which the separation functional layer is attached) is then cut by a freeze-cutting method to obtain a sample for cross-sectional observation. This sample is thinly coated with platinum, platinum-palladium or ruthenium tetrachloride, preferably with ruthenium tetrachloride, and observed by a high-resolution field-emission scanning electron microscope (UHR-FE-SEM) at an accelerating voltage of 3 to 6 kV. With respect to the high-resolution field-emission scanning electron microscope, for example, an electron microscope, Model S-900, manufactured by Hitachi, Ltd. can be used.

The thickness of the supporting membrane affects the strength of the composite semipermeable membrane and the packing density of the composite semipermeable membrane incorporated into an element. In order for the composite semipermeable membrane of the present invention to obtain sufficient mechanical strength and packing density, the thickness of the supporting membrane is preferably in the range of 30 to 300 μm, more preferably in the range of 50 to 250 μm.

The supporting membrane used in the present invention can be selected from various commercially available materials, such as "Millipore Filter VSWP" (trade name) manufactured by Millipore Corporation and "Ultrafilter UK10" (trade name) manufactured by Toyo Roshi Kaisha, Ltd., but can also be produced in accordance with the method described in "Office of Saline Water Research & Development Progress Report", No. 359 (1968).

The thickness of each of the substrate, microporous support layer and composite semipermeable membrane can be measured by a digital thickness gauge. In addition, since the later-described separation functional layer is very thin compared with the supporting membrane, the thickness of the composite semipermeable membrane can be regarded as the thickness of the supporting membrane. Therefore, the thickness of the microporous support layer can be simply calculated by measuring the thickness of the composite semipermeable membrane with the digital thickness gauge and subtracting the thickness of the substrate from the thickness of the composite semipermeable membrane. As the digital thickness gauge, for example, PEACOCK, manufactured by OZAKI MFG. CO., LTD., can be used. In the case of using the digital thickness gauge, the thickness at 20 locations are measured and an average value is calculated.

The thickness of each of the substrate, microporous support layer and composite semipermeable membrane may be measured by the microscopes described above. Thicknesses are measured in electron microscope images obtained by observing the cross-section at arbitrary 5 locations for one sample, and an average value thereof is calculated to determine the thickness. Note that the "thickness" and "pore diameter" in the present invention mean the average values.

(1-2) Separation Functional Layer

In the composite semipermeable membrane of the present invention, the member substantially having separation performance for ions, etc. is the separation functional layer.

Here, the composite semipermeable membrane of the present invention satisfies the following conditions (A) and (B).

(A) In a differential spectrum Sd obtained by subtracting an infrared absorption (IR) spectrum S2 of the surface on the separation functional layer side of the composite semipermeable membrane equilibrated at a temperature of 25°C and a relative humidity of 11.3% RH from an infrared absorption (IR) spectrum S1 of the surface on the separation functional layer side of the composite semipermeable membrane equilibrated at a temperature of 25°C and a relative humidity of 97.3% RH, the half width H of an absorption peak between 3,900 $cm^{-1}$ and 2,900 $cm^{-1}$ is 355 or more and 373 or less.

(B) In the infrared absorption (IR) spectrum S1, the value F obtained by dividing the absorption intensity area between 3,900 $cm^{-1}$ and 2,900 $cm^{-1}$ by the absorbance of the peak top between 1,690 $cm^{-1}$ and 1,630 $cm^{-1}$ is 850 or more.

The present inventors have found that the water permeation performance, salt removal performance and durability of the composite semipermeable membrane are affected by the state of how water contained in the composite semipermeable membrane exists. When the state of how water contained in the composite semipermeable membrane exists is classified into two types, it is classified into free water that weakly interacts with a polymer, and bound water that strongly interacts with the polymer and is low in permeability. The state of how free water and bound water are present affects the water permeability of the composite semipermeable membrane and the swollen state of the polymer.

Specifically, in the differential spectrum Sd of (A) above, the peak in the range from 3,900 to 2,900 $cm^{-1}$ indicates

a stretching vibration of O-H bond of water molecules contained in the separation functional layer.

In addition, when the half width H is small, this means that the proportion of bound water in the total amount of water contained in the separation functional layer is large. Accordingly, as the half width H is smaller, the water permeation performance of the membrane decreases.

On the other hand, when the half width H is large, this means that the proportion of free water in the total amount of water contained in the composite semipermeable membrane is large. Accordingly, as the half width H is larger, the water permeation performance is enhanced, but solute ions are likely to interact with water, and hydrated ions in the solute are allowed to permeate together with water, leading to a decrease in the salt removal performance.

The present inventors have found that when the half width H is 355 or more and 373 or less, high water permeation performance can be obtained while maintaining high salt removal performance and furthermore, excellent durability is also attained.

The half width H is preferably 368 or more and 372 or less.

The value F of (B) above indicates the magnitude of the water content in the separation functional layer of the composite semipermeable membrane. Accordingly, when the value is 850 or more, the water permeation performance is high. The value F is preferably 1,500 or less. When the value is 1,500 or less, a pore structure for exhibiting good removal performance can be maintained.

As the method for adjusting the relative humidity at a given temperature, the saturated salt method described in JIS B 7920 may be used. In addition, for the measurement of IR spectrum of the composite semipermeable membrane, measurement can be performed by the total reflection infrared spectroscopy (ATR). Specifically, these are described in Examples.

The separation functional layer retains a lot of intermediate water (sometimes referred to as hydration water) in the case of containing the later-described hydrophilic polymer such as polyamide, and heat absorption at a temperature of less than 0°C is due to elimination of the intermediate water. The amount of intermediate water in the separation functional layer has relation with a high-order structure of a polymer constituting the separation functional layer and as the layer retains a larger amount of intermediate water, the intermolecular void of the polymer forms a larger structure. As the intermolecular void of the separation functional layer is smaller, the solute removal performance of the composite semipermeable membrane is enhanced, but, on the other hand, if the intermolecular void is too small, the water permeation performance is reduced.

The hydrated state in the separation functional layer can be analyzed by temperature modulated DSC method.

The temperature modulated DSC method is a thermal analysis method of performing measurement by averagely raising the temperature while repeating heating and cooling at a constant cycle and amplitude, and signals observed as the total heat flow can be separated into a reversible component originating from glass transition, etc. and an irreversible component originating from dehydration, etc.

After the substrate is physically peeled off and removed from the composite semipermeable membrane and the microporous support layer is then removed by extraction with a solvent such as dichloromethane, the obtained separation functional layer is measured as an analysis sample and the endothermic amount of the irreversible component is analyzed in the range of -20 to 150°C in the initial temperature rise process. The value of the endothermic amount is determined as an average value of three measurements.

As a result of intensive studies, the present inventors have found that a composite semipermeable membrane where, regarding the separation functional layer, the temperature at which an endothermic amount indicates 1/2 of the peak value of the irreversible endothermic amount at -10°C or more and 0°C or less in the initial temperature rise process, which is measured by the temperature modulated DSC method, is in the range of -5°C or more and - 2°C or less and the integral value of the irreversible endothermic amount is 200 J/g or more and 300 J/g or less, is preferred, because both high water permeation performance and high salt removal performance are more easily achieved.

The temperature at which an endothermic amount indicates 1/2 of the peak value is more preferably -4°C or more and -3°C or less. In addition, the integral value is more preferably 250 J/g or more and 300 J/g or less.

The state of how water contained in the composite semipermeable membrane exists is classified into free water that weakly interacts with a polymer, and bound water that strongly interacts with the polymer and is low in motility, and furthermore, intermediate water exhibiting an interaction of intermediate intensity therebetween is present.

The intermediate water is in the state contributing to water permeation performance while interacting with a polyamide and therefore, particularly in the range of -10°C or more and 0°C or less where an endothermic peak of intermediate water appears in DSC method, the peak value and integral amount serve as a good index indicating characteristics of the interaction between polyamide and water.

When the temperature at which an endothermic amount indicates 1/2 of the peak value of the irreversible endothermic amount of water is in the range of -5°C or more and - 2°C or less, this means that the intermediate water is in the state of high uniformity, that is, the interaction with polyamide is uniform, and in turn, polyamide intermolecular voids are uniform in structure.

The intermolecular voids are uniform in structure in the range of -10°C or more and 0°C or less where an

endothermic peak of intermediate water appears, and a membrane prevented from variation in the solute permeability and assured of high salt removal performance is thereby obtained. Furthermore, when the integral value is 200 J/g or more and 300 J/g or less, this means that the amount of water in polyamide contributing to permeability is large. More specifically, with a membrane satisfying both parameters, both high water permeation performance and high salt removal performance are likely to be achieved.

In the separation functional layer of the composite semipermeable membrane according to the present invention, the average pore radius measured by a positron annihilation lifetime measurement is preferably 0.15 nm or more and 0.42 nm or less so as to achieve both high water permeation performance and high salt removal performance.

When the average pore radius is 0.15 nm or more, intermolecular voids large enough to provide high water permeation performance are formed. Furthermore, when the intermolecular voids have an average pore radius of 0.42 nm or less, high salt removal performance is exhibited.

The positron annihilation lifetime measurement is a method of measuring the time period (in the order of magnitude from several hundreds of picoseconds to several tens of nanoseconds) after entering of a positron into the sample until its annihilation, and based on the annihilation lifetime, non-destructively evaluating the information such as size of holes of 0.1 to 10 nm and their number density and size distribution. This measurement method is described also in "The Fourth Series of Experimental Chemistry", Vol. 14, p. 485, The Chemical Society of Japan, Maruzen Co., Ltd. (1992).

The method above is classified into two types by the type of positron source. One is a 22Na method using a radioactive isotope (22Na), and this method is suitable for evaluating holes of resin, powder, fiber, liquid, etc. Another is a positron beam method using a positron beam emitted from an electron beam accelerator as a positron source, and this method is useful in evaluating holes for thin films with a thickness of about several hundred nm formed on various substrates. In particular, the latter positron beam method is more preferred as the measurement method for the separation functional layer of the composite semipermeable membrane. It is because, even when the composite semipermeable membrane is used as a measurement sample, the separation functional layer can be measured only by maintaining the sample in a dry state, and a specific process such as isolation of the separation functional layer from the composite semipermeable membrane is not required.

In the positron beam method, the measurement region in the depth direction from the sample surface is adjusted according to the energy amount of the positron beam incident on the sample. As the energy is set to be higher, a deeper part from the sample surface is included in the measurement region, but the depth depends on the sample density. In the measurement of the separation functional layer of the composite semipermeable membrane, when the sample is irradiated with a positron beam having an energy of about 1 keV, a region at a depth of 50 to 150 nm from the sample surface is usually measured. In addition, for the separation functional layer having a thickness of approximately from 150 to 300 nm, the central part of the separation functional layer can be selectively measured.

A positron and an electron combine with each other by Coulomb force to form a positronium (Ps) that is a neutral hydrogen-like atom. The positronium (Ps) includes para-positronium (p-Ps) and ortho-positronium (o-Ps) depending on whether the spins of positron and electron are antiparallel or parallel. The two species are formed in a ratio of 1:3 (determined by spin statistics). The average lifetime of each species is 125 picoseconds for p-Ps and 140 nanoseconds for o-Ps. In substances in an aggregated state, the probability of overlapping of o-Ps with an electron different from one to which the o-Ps itself is combined (a phenomenon called pickoff annihilation) increases, as a result, the average lifetime of o-Ps decreases to several nanoseconds. The annihilation of o-Ps in an insulating material occurs due to the overlapping of o-Ps with an electron existing in the hole wall of the material and therefore, as the hole size is smaller, the annihilation speed increases. That is, the annihilation lifetime $\tau$ of o-Ps can be related to the size (diameter) of holes existing in the insulating material.

The annihilation lifetime $\tau$ due to the above-described pickoff annihilation of o-Ps can be determined from the analysis result of the fourth component obtained by dividing the positron annihilation lifetime curve measured by positron annihilation lifetime measurement into four components in conformity with a nonlinear least squares program, POSITRONFIT (see, e.g., P. Kierkegaard et al., Computer Physics Communications, Vol. 3, p. 240, North Holland Publishing Co. (1972) for details).

The average pore radius R in the separation functional layer of the composite semipermeable membrane of the present invention is obtained according to the following equation (1) based on the positron annihilation lifetime $\tau$ described above. Equation (1) shows a relationship assuming that o-Ps is present in holes with an average pore radius R contained in an electronic layer with a thickness $\Delta R$, and $\Delta R$ is empirically determined to be 0.166 nm (see Nakanishi et al., Journal of Polymer Science, Part B: Polymer Physics, Vol. 27, p. 1419, John Wiley & Sons, Inc. (1989) for details).

[Equation 1]

$$\tau^{-1} = 2\left[1 - \frac{R}{R+\Delta R} + \frac{1}{2\pi}\sin\left(\frac{2\pi R}{R+\Delta R}\right)\right] \qquad (1)$$

The separation functional layer contains a polyamide as the main component. The polyamide constituting the separation functional layer can be formed, for example, by interfacial polycondensation of a polyfunctional amine and a polyfunctional acid halide. Here, at least either one of the polyfunctional amine and the polyfunctional acid halide preferably contains a tri- or higher functional compound.

The separation functional layer contains a crosslinked aromatic polyamide as the polyamide. In addition, the crosslinked aromatic polyamide is preferably a polycondensate of metaphenylenediamine and trimesic acid chloride (hereinafter, sometimes referred as TMC).

The thickness of the separation functional layer is usually in the range of 0.01 to 1 μm, preferably in the range of 0.1 to 0.5 μm, so as to obtain sufficient separation performance and a sufficient amount of permeate.

The polyfunctional amine as used herein indicates an amine having at least two primary amino groups and/or secondary amino groups per molecule, with at least one of the amino groups being a primary amino group, and examples thereof include an aromatic polyfunctional amine such as phenylenediamine in which two amino groups bonded to the benzene ring have any of ortho-, meta- or para-positional relationship, xylylenediamine, 1,3,5-triaminobenzene, 1,2,4-triaminobenzene, 3,5-diaminobenzoic acid, 3-aminobenzylamine and 4-aminobenzylamine, an aliphatic amine such as ethylenediamine and propylenediamine, and an alicyclic polyfunctional amine such as 1,2-diaminocyclohexane, 1,4-diaminocyclohexane, 4-aminopiperidine and 4-aminoethylpiperazine.

Among these, in consideration of selective separation, permeability and heat resistance of the membrane, an aromatic polyfunctional amine having from 2 to 4 primary amino groups and/or secondary amino groups per molecule is preferred. As this aromatic polyfunctional amine, for example, m-phenylenediamine, p-phenylenediamine, and 1,3,5-triaminobenzene are preferably used. Above all, in view of availability and ease of handling, it is more preferable to use m-phenylenediamine (hereinafter, referred to as m-PDA). One of these polyfunctional amines may be used alone, or two or more thereof may be used at the same time. In the case of using two or more thereof at the same time, the amines above may be combined with each other, or an amine above may be combined with an amine having at least two secondary amino groups per molecule. Examples of the amine having at least two secondary amino groups per molecule include piperazine and 1,3-bispiperidylpropane.

The polyfunctional acid halide indicates an acid halide having at least two halogenated carbonyl groups per molecule and includes, for example, a trifunctional acid halide and a bifunctional acid halide.

Examples of the trifunctional acid halide include trimesoyl chloride, 1,3,5-cyclohexanetricarbonyl trichloride, and 1,2,4-cyclobutanetricarbonyl trichloride. Examples of the bifunctional acid halide include an aromatic bifunctional acid halide such as biphenyldicarbonyl dichloride, azobenzenedicarbonyl dichloride, terephthaloyl chloride, isophthaloyl chloride and naphthalenedicarbonyl chloride, an aliphatic bifunctional acid halide such as adipoyl chloride and sebacoyl chloride, and an alicyclic bifunctional acid halide such as cyclopentanedicarbonyl dichloride, cyclohexanedicarbonyl dichloride and tetrahydrofurandicarbonyl dichloride.

In consideration of reactivity with the polyfunctional amine, the polyfunctional acid halide is preferably a polyfunctional acid chloride, and in consideration of selective separation and heat resistance of the membrane, the polyfunctional acid halide is preferably a polyfunctional aromatic acid chloride having from 2 to 4 chlorocarbonyl groups per molecule. Among others, in view of availability and ease of handling, it is more preferable to use trimesoyl chloride. One of these polyfunctional acid halides may be used alone, or two or more thereof may be used at the same time.

Furthermore, a monofunctional acid halide, a trimesoyl chloride with one acid chloride group being hydrolyzed (hereinafter, sometimes referred to as monohydrolyzed TMC), or a trimesoyl chloride with two acid chloride groups being hydrolyzed (hereinafter, sometimes referred to as dihydrolyzed TMC) may be used as an additive. Examples of such a monofunctional acid halide include benzoyl fluoride, benzoyl chloride, benzoyl bromide, methanoyl fluoride, methanoyl chloride, methanoyl bromide, ethanoyl fluoride, ethanoyl chloride, ethanoyl bromide, propanoyl fluoride, propanoyl chloride, propanoyl bromide, propenoyl fluoride, propenoyl chloride, propenoyl bromide, butanoyl fluoride, butanoyl chloride, butanoyl bromide, butenoyl fluoride, butenoyl chloride, and butenoyl bromide. One of these additives may be used alone, or two or more thereof may be used at the same time.

The separation functional layer includes a thin film having a pleated structure including a plurality of convex parts and concave parts.

Furthermore, in an electron microscope image of a cross-section at each of arbitrary 10 locations, having the length in the membrane surface direction of the composite semipermeable membrane being 2.0 μm, the standard deviation of the height of convex parts having a height of one fifth or more of the 10-point average surface roughness in the separation functional layer is preferably 60 nm or less.

The standard deviation is more preferably 1 nm or more and 55 nm or less, still more preferably 1 nm or more and 50 nm or less.

When the standard deviation of the height of convex parts is 60 nm or less, this means that a plurality of pleats have completed the growth substantially at the same time in the course of forming pleats. More specifically, when the standard deviation of the height of convex parts is 60 nm or less, it is considered that the water inside the pore structure obtained around the same time have less variation in the ratio of bound water and free water.

The average height of the convex parts in the electron microscope image is 100 nm or more and 500 nm or less, more preferably 200 nm or more and 500 nm or less, still more preferably 300 nm or more and 500 nm or less.

2. Production Method of Composite Semipermeable Membrane

An example of the production method for the above-described composite semipermeable membrane of the present invention is described below.

(2-1) Formation of Separation Functional Layer

The production method for the composite semipermeable membrane of present invention includes a step of forming a separation functional layer on a microporous support layer.

This step includes a substep of bringing an aqueous polyfunctional amine solution and a solution containing an aliphatic carboxylic acid and a polyfunctional acid halide into contact with a microporous support layer to form a polyamide layer through an interfacial polycondensation reaction, and a substep of adding a compound having an SP value of 7 $(cal/cm^3)^{1/2}$ or more and 15 $(cal/cm^3)^{1/2}$ or less to a reaction field of the interfacial polycondensation.

More specifically, the step of forming a separation functional layer on a microporous support layer includes

(1) a substep of bringing an aqueous polyfunctional amine solution into contact with a microporous support layer,
(2) a substep of, after the substep (1), bringing a solution containing an aliphatic carboxylic acid and a polyfunctional acid halide into contact with the microporous support layer, and
(3) a substep of bringing a compound except for the aliphatic carboxylic acid in the substep (2) into contact with the microporous support layer after 5 seconds or more and 60 seconds or less from the start of the substep (2), the compound having an SP value of 7 $(cal/cm^3)^{1/2}$ or more and 15 $(cal/cm^3)^{1/2}$ or less.

Each substep is described in detail below.

According to the substeps (1) and (2), an aqueous solution containing the polyfunctional amine described above (hereinafter, sometimes referred to as an aqueous polyfunctional amine solution) and a solution containing an aliphatic carboxylic acid and a polyfunctional acid halide (hereinafter, sometimes referred to a polyfunctional acid halide solution) into contact with the microporous support layer to perform interfacial polycondensation on a surface of the microporous support layer, and a polyamide can thereby be produced.

The concentration of the polyfunctional amine in the aqueous polyfunctional amine solution is preferably in the range of 0.1 to 20 wt%, more preferably in the range of 0.5 to 15 wt%. Within this range, sufficient salt removal performance and sufficient water permeation performance can be obtained.

In the aqueous polyfunctional amine solution, a surfactant, an organic solvent, an alkaline compound, an antioxidant, etc. may be contained as long as these do not interfere with the reaction between the polyfunctional amine and the polyfunctional acid halide.

The surfactant includes, for example, a compound having a polyoxyalkylene structure, a fatty acid ester structure or a hydroxyl group. Examples of the polyoxyalkylene structure include $-(CH_2CH_2O)_n-$, $-(CH_2CH_2(CH_3)O)_n-$, $-(CH_2CH_2CH_2O)_n-$, and - $(CH_2CH_2CH_2CH_2O)_n-$. Examples of the fatty acid ester structure include a fatty acid having a long chain aliphatic group. The long chain aliphatic group may be either linear or branched. Examples of the fatty acid include stearic acid, oleic acid, lauric acid, palmitic acid, and salts thereof and in addition, include a fat or oil-derived fatty acid ester such as beef tallow, palm oil and coconut oil. Examples of the surfactant having a sulfo group include 1-hexanesulfonic acid, 1-octanesulfonic acid, 1-decanesulfonic acid, 1-dodecanesulfonic acid, perfluorobutanesulfonic acid, toluenesulfonic acid, cumene sulfonic acid, and octylbenzenesulfonic acid. Examples of the surfactant having a hydroxyl group include ethylene glycol, propylene glycol, 1,3-propanediol, 1,4-butanediol, glycerin, sorbitol, glucose, and sucrose. The surfactant is effective in improving the wettability of the surface of the microporous support layer and reducing the interfacial tension between the aqueous amine solution and a nonpolar solvent.

The organic solvent includes, for example, a chain amide compound and a cyclic amide compound. Examples of the chain amide compound include N-methylformamide, N,N-dimethylformamide, N,N,-dimethylacetamide, N,N-diethylformamide, and N,N-diethylacetamide. Examples of the cyclic amide compound include N-methylpyrrolidinone, γ-butyrolactam, and ε-caprolactam. The organic solvent may act as a catalyst for the interfacial polycondensation reaction,

and its addition sometimes makes it possible to efficiently perform the interfacial polycondensation reaction.

Examples of the alkaline compound include an alkali metal hydroxide such as sodium hydroxide and potassium hydroxide, a carbonate or bicarbonate inorganic compound such as sodium carbonate, sodium hydrogencarbonate, potassium carbonate and potassium hydrogencarbonate, and an organic compound such as tetramethylammonium hydroxide and tetraethylammonium hydroxide.

The antioxidant includes, for example, a phenol-based antioxidant, an amine-based antioxidant, a sulfur-based antioxidant, and a phosphorus-based antioxidant. Examples of the phenol-based antioxidant (including a hindered phenol-based antioxidant) include 2,6-di-tert-butyl-4-methylphenol, 2,2'-methylene bis(4-ethyl-6-tert-butylphenol) and tetrakis-[methylene-3-(3',5'-di-tert-butyl-4'-hydroxyphenyl) propionate]methane. Examples of the amine-based antioxidant include phenyl-P-naphthylamine, $\alpha$-naphthylamine, N,N'-di-sec-butyl-p-phenylenediamine, phenothiazine, and N,N'-diphenyl-p-phenylenediamine. Examples of the sulfur-based antioxidant include dilauryl 3,3'-thiodipropionate, distearyl thiodipropionate, lauryl stearyl thiodipropionate, and dimyristyl 3,3'-thiodipropionate. Examples of the phosphorus-based antioxidant include triphenyl phosphite, octadecyl phosphite, and trinonylphenyl phosphite. Examples of other antioxidants include ascorbic acid or an alkali metal salt thereof, a sterically hindered phenol compound such as dibutylhydroxytoluene and butylhydroxyanisole, isopropyl citrate, dl-$\alpha$-tocopherol, nordihydroguaiaretic acid, and propyl gallate.

As a result of intensive studies by the present inventors, when the interfacial polycondensation is performed in the presence of an aliphatic carboxylic acid including a linear or branched alkyl group and having 5 or more carbon atoms, in the pleated structure of the separation functional layer and in an electron microscope image of a cross-section at each of arbitrary 10 locations, having the length in the membrane surface direction of the composite semipermeable membrane being 2.0 $\mu$m, the standard deviation of the height of convex parts having a height of one fifth or more of the 10-point average surface roughness in the separation functional layer can be 60 nm or less, and the average height of the convex parts in the electron microscope image above can be 100 nm or more and 500 nm or less.

The aliphatic carboxylic acid may be added to the aqueous polyfunctional amine solution or may be previously impregnated into the porous supporting membrane.

Furthermore, with respect to the aliphatic carboxylic acid in which the main chain is composed of a linear or branched alkyl group, use can be made of, as a linear saturated alkylcarboxylic acid, caproic acid, heptanoic acid, caprylic acid, pelargonic acid, nonanoic acid, decanoic acid, undecanoic acid, dodecanoic acid, tridecanoic acid, etc.; as a branched saturated alkylcarboxylic acid, caprylic acid, isobutyric acid, isopentanoic acid, butylacetic acid, 2-ethylheptanoic acid, 3-methylnonaoic acid, etc.; and as an unsaturated alkylcarboxylic acid, methacrylic acid, trans-3-hexenoic acid, cis-2-octenoic acid, trans-4-nonenoic acid, etc.

The total number of carbon atoms of the aliphatic carboxylic acid is preferably in the range of 5 to 20, more preferably in the range of 8 to 15. If the total number of carbon atoms is less than 5, the effect of enhancing water permeation performance of the separation functional membrane tends to be reduced, and if the total number of carbon atoms exceeds 20, the boiling point becomes high, making removal from the membrane difficult, and high water permeation performance is less likely to be exhibited.

Furthermore, the HLB value of the aliphatic carboxylic acid is preferably 4 or more and 12 or less. When the HLB value of the aliphatic carboxylic acid is within this range, water permeation performance and contamination resistance of the membrane are improved at the same time and furthermore, removal of a polyfunctional acid halide solution from the microporous supporting membrane is facilitated.

Here, the HLB value is a value indicating the degree of affinity of the compound for a water-immiscible organic solvent. Several methods for determining the HLB value by calculation have been proposed. According to the Griffin's method, the HLB value is defined by the following formula:

$$\text{HLB value} = 20 \times \text{HLB value of hydrophilic moiety}$$
$$= 20 \times (\text{total formula mass of hydrophilic moiety})/(\text{molecular weight})$$

The concentration of the aliphatic carboxylic acid in the polyfunctional acid halide solution may be appropriately determined according to the aliphatic carboxylic acid added and, specifically, the concentration is preferably in the range of 0.03 to 30 wt%, more preferably in the range of 0.06 to 10 wt%.

In order to perform the interfacial polycondensation on the microporous support layer, first, the above-described aqueous polyfunctional amine solution is brought into contact with the microporous support layer. The contact is preferably performed evenly and continuously on the surface of the microporous support layer. Specifically, the method therefor includes a method in which the aqueous polyfunctional amine solution is applied onto the microporous support layer, a method by coating, and a method in which the supporting membrane is immersed in the aqueous polyfunctional amine solution.

The time for which the microporous support layer is in contact with the aqueous polyfunctional amine solution is preferably in the range of 1 to 10 minutes, more preferably in the range of 1 to 3 minutes.

After the contact with the microporous support layer, the aqueous polyfunctional amine solution is fully drained to allow for no remaining of liquid droplet on the microporous support layer. Owing to full draining, the liquid droplet-remaining portion can be prevented from becoming a membrane defect after membrane formation and reducing the membrane performance. As the method for draining, for example, the method described in JP-A-H2-78428 in which the supporting membrane after the contact with the aqueous polyfunctional amine solution is held vertically to cause gravity flow of an excess aqueous solution, or a method in which a stream of a gas such as nitrogen is blown from an air nozzle to forcibly drain the solution, may be used. In addition, after the draining, the membrane surface may also be dried to remove a part of water of the aqueous solution.

Subsequently, a polyfunctional acid halide solution is brought into contact with the microporous support layer after the contact with the aqueous polyfunctional amine solution to form a skeleton of a separation functional layer through interfacial polycondensation.

The concentration of the polyfunctional acid halide in polyfunctional acid halide solution is preferably in the range of 0.01 to 10 wt%, more preferably in the range of 0.02 to 2.0 wt%. It is because, when the concentration is 0.01 wt% or more, a sufficiently high reaction rate is obtained, and when the concentration it is 10 wt% or less, the occurrence of side reactions can be suppressed. Furthermore, since the interfacial polycondensation is accelerated, it is more preferable to incorporate an acylation catalyst such as N,N-dimethylformamide (hereinafter sometimes referred to as DMF) into the polyfunctional acid halide solution.

The organic solvent used in the polyfunctional acid halide solution is preferably a solvent that is immiscible with water, dissolves the polyfunctional acid halide and does not damage the supporting membrane, and may be one that is inert to the polyfunctional amine compound and the polyfunctional acid halide. Preferred examples thereof include a hydrocarbon compound such as n-hexane, n-octane and n-decane.

The method for bringing the polyfunctional acid halide solution into contact with the aqueous polyfunctional amine compound solution phase may be performed in the same manner as the above-described method for coating the microporous support layer with the aqueous polyfunctional amine solution. In particular, a method of applying the solution onto the microporous support layer and a method of coating the porous support layer with the solution are suitable.

The temperature of the membrane surface immediately after the aqueous polyfunctional amine solution and the polyfunctional acid halide solution are brought into contact with each other is preferably from 25 to 60°C, more preferably from 30 to 50°C. It is because, if the temperature is less than 25°C, pleats do not grow, leading to a decrease in the permeation flux, and if the temperature is higher than 60°C, the salt removal ratio tends to decrease. By setting the temperature of the membrane surface immediately after the contact between the aqueous polyfunctional amine solution and the polyfunctional acid halide solution to the range from 25 to 60°C, the actual length of the separation functional layer per 1 μm length of the supporting membrane can made to be 2 μm or more and 5 μm or less and in turn, a high permeation flux and a high salt removal ratio can be achieved.

With respect to the method for setting the temperature, the supporting membrane may be heated, or a heated polyfunctional acid halide solution may be brought into contact. The temperature of the membrane surface immediately after the aqueous polyfunctional amine solution and the polyfunctional acid halide solution are brought into contact with each other can be measured by a non-contact thermometer such as radiation thermometer.

After the separation functional layer containing a crosslinked polyamide is thus formed on the microporous support layer through interfacial polycondensation by means of contact with the polyfunctional acid halide solution, the excess solvent may be drained. As the method for draining, for example, a method in which the membrane is held vertically to allow the excess organic solvent to be gravity-flowed and removed, can be used. In this case, the time period for holding vertically is preferably from 1 to 5 minutes, more preferably from 1 to 3 minutes. If the time period is too short, the separation functional layer may not be completely formed, and if the time period is too long, the organic solvent is likely to be overdried, resulting in tendency of generating a defect and tendency of performance deterioration.

In the substep (3), a compound except for the aliphatic carboxylic acid in the substep (2), the compound having an SP value of 7 $(cal/cm^3)^{1/2}$ or more and 15 $(cal/cm^3)^{1/2}$ or less, preferably 7 $(cal/cm^3)^{1/2}$ or more and 10 $(cal/cm^3)^{1/2}$ or less, is brought into contact with the microporous support layer after 5 seconds or more and 60 seconds or less from the start of the substep (2), and the following effects are thereby obtained.

During polyamide formation, amides of various molecular weights exist in the reaction field. When oligomers of amide having a small molecular weight aggregate with each other, the pore diameter tends to be nonuniform.

Here, the SP value is a solubility parameter and is a value defined as $(\Delta H/V)^{1/2}$ $(cal/cm^3)^{1/2}$ based on the molar evaporation heat $\Delta H$ and the molar volume V of the solution. A compound having an SP value of 7 $(cal/cm^3)^{1/2}$ or more and 15 $(cal/cm^3)^{1/2}$ or less has high affinity for amide oligomers. Therefore, when such a compound is in the reaction field of amide polycondensation, interaction between the oligomer having a small molecular weight and this compound can suppress the aggregation of oligomers with each other, and the separation functional layer referred to in the present invention is obtained.

Example of the compound having an SP value of 7 $(cal/cm^3)^{1/2}$ or more and 15 $(cal/cm^3)^{1/2}$ or less except for the aliphatic carboxylic acid include a hydrocarbon, an ester, a ketone, an amide, an alcohol, and an ether, in present invention an ethylene glycol ether is used.

Examples of the ethylene glycol ether are ethylene glycol dimethyl ether, ethylene glycol diethyl ether, ethylene glycol dibutyl ether, diethylene glycol dimethyl ether, diethylene glycol diethyl ether, diethylene glycol dibutyl ether, diethylene glycol methyl ethyl ether, diethylene glycol butyl methyl ether, diethylene glycol isopropyl methyl ether, diethylene glycol ethyl ether acetate, diethylene glycol butyl ether acetate, diethylene glycol bis(3-aminopropyl)ether, tetraethylene glycol dimethyl ether and tetraethylene glycol diethyl ether, a diethylene glycol butyl diacetate, a diethylene glycol dibenzoate, and a diethylene glycol bis(p-toluenesulfonic acid).

In addition, 1,2-bis(2-aminoethoxy)ethane and dipropylene glycol dimethyl ether can also be used.

The substep (3) is performed by bringing a solution containing a compound having an SP value of 7 $(cal/cm^3)^{1/2}$ or more and 15 $(cal/cm^3)^{1/2}$ or less into contact with the microporous support layer. The concentration of the compound in the solution is 10 wt% or less, more preferably 5 wt% or less. In the case where the solution contains a plurality of compounds, the total of concentrations thereof can be in the range above.

The type of the organic solvent used for the solution above may be , as with the solvent used for the above-described polyfunctional acid halide, one does not damage the supporting membrane and is inert to the polyfunctional amine compound and polyfunctional acid halide, and preferred examples thereof include a hydrocarbon compound such as n-hexane, n-octane and n-decane.

For bringing the compound having an SP value of 7 $(cal/cm^3)^{1/2}$ or more and 15 $(cal/cm^3)^{1/2}$ or less into contact with the interfacial polymerization reaction field, the solution containing such a compound may be brought into contact with the microporous support layer. With respect to the method for bringing the solution into contact, the solution may be brought into contact in the same manner as in the method for bringing the polyfunctional acid halide solution into contact with the aqueous polyfunctional amine compound solution phase.

Furthermore, it has been found that when addition of this compound (i.e., contact with the solution) is performed after 5 seconds or more and 60 seconds or less from the start of the substep (2), that is, after the start of polycondensation of the amide, this enables sufficiently preventing the aggregation of oligomers and provides high height uniformity to the pleated structure of the formed separation functional layer and enhanced uniformity to the interaction between water present in the inside thereof and a polymer constituting the separation functional layer.

The convex parts of the pleated structure increase the stability to washing with a basic solution when used, for example, in a composite semipermeable filtration process. The durability against contact with the basic solution is achieved, because an additive present in the interfacial polymerization system is separated from the oligomer before the substep (3) and the terminal functional group can thereby be more precisely controlled. In the present invention, since an aliphatic carboxylic acid is added in the substep (2), the effect above is prominent.

In addition, this compound can reduce turbulence at the reaction interface by adding it after the start of the substep (2), as a result, a membrane having high water permeation performance can be obtained. Specifically, addition of the compound is performed after the elapse of 5 seconds or more and 60 seconds or less, preferably after 10 seconds or more and 30 seconds or less, from the start of polycondensation.

After the contact with the compound having an SP value of 7 $(cal/cm^3)^{1/2}$ or more and 15 $(cal/cm^3)^{1/2}$ or less, the solution is preferably drained by the same method as that described for the polyfunctional acid halide solution.

(2-2) Formation of Microporous Support Layer

The production method of the composite semipermeable membrane of the present invention may include a step of forming a microporous support layer. The substrate is as already illustrated.

The microporous support layer can be formed, for example, by casting a DMF solution of the polysulfone above on a substrate to a certain thickness, and wet-coagulating it in water. According to this method, a microporous support layer in which most part of the surface has fine pores with a diameter of tens of nm or less, can be obtained.

(2-3) Other Treatments

The composite semipermeable membrane obtained by the above-described method may be additionally subjected, for example, to a step of performing a hydrothermal treatment at 50 to 150°C, preferably 70 to 130°C, for 1 second to 10 minutes, preferably 1 to 8 minutes, and the salt removal performance and water permeation performance of the composite semipermeable membrane can thereby be enhanced.

Furthermore, the salt removal performance of the composite semipermeable membrane obtained in the present invention can further be enhanced by including a step of bringing the membrane into contact with a compound (I) that reacts with a primary amino group on the separation functional layer to produce a diazonium salt or a derivative thereof after the hydrothermal treatment, and subsequently bringing the membrane into contact with a water-soluble compound

(II) having reactivity with the compound (I).

Examples of the solution of the compound (I) include aqueous solutions of nitrous acid, a salt thereof, and a nitrosyl compound. The aqueous solution of nitrous acid or a nitrosyl compound is likely to generate a gas and be decomposed and therefore, it is preferable to successively produce nitrous acid, for example, by a reaction between nitrite and an acidic solution. In general, nitrite reacts with hydrogen ion to form nitrous acid ($HNO_2$), and the nitrous acid is efficiently produced at pH of the aqueous solution of 7 or less, preferably 5 or less, more preferably 4 or less. Among others, in view of ease of handling, an aqueous solution of sodium nitrite reacted with hydrochloric acid or sulfuric acid in an aqueous solution is preferred.

The concentration of compound (I), for example, sodium nitrite, in the solution is preferably in the range of 0.01 to 1 wt%. Within this range, a sufficient effect of producing a diazonium salt or a derivative thereof is obtained, and the solution is also easy to handle.

The temperature of the solution is preferably 15 to 45°C. Within this range, the reaction does not take too much time, and decomposition of the nitrous acid does not occur too rapidly, making the handling easy.

The contact time with the compound (I) may be the time long enough to produce a diazonium salt and/or a derivative thereof, and processing in a short time may be possible at high concentration, but a long time is required when the concentration is low. Therefore, the contact time with the solution at the above-described concentration is preferably within 10 minutes, more preferably within 3 minutes. The method for contacting is not particularly limited, and a solution of the compound (I) may be applied (coating) or the composite semipermeable membrane of the present invention may be immersed in a solution of the compound (I). As the solvent for dissolving the compound (I), any solvent may be used as long as the compound (I) dissolves and the composite semipermeable membrane of the present invention does not erode. In addition, the solution may contain a surfactant, an acidic compound, an alkaline compound, etc. as long as it does not interfere with the reaction between the primary amino group and the reagent.

A diazonium salt or a derivative thereof can thus be produced in the composite semipermeable membrane.

Next, the composite semipermeable membrane is brought into contact with the water-soluble compound (II) which reacts with the diazonium salt or a derivative thereof. Examples of the water-soluble compound (II) which reacts with the diazonium salt or a derivative thereof include chloride ion, bromide ion, cyanide ion, iodide ion, fluoroboric acid, hypophosphorous acid, sodium bisulfite, sulfite ion, an aromatic amine, phenols, hydrogen sulfide, and thiocyanic acid.

When the membrane is reacted with sodium bisulfite and sulfite ion, a substitution reaction occurs instantaneously, and an amino group is replaced with a sulfo group. Furthermore, when the membrane is brought into contact with an aromatic amine or phenols, a diazo coupling reaction occurs, making it possible to introduce an aromatic group into the membrane surface. These compounds may be used individually, a mixture of a plurality thereof may be used, or the membrane may be brought into contact with different compounds multiple times. As the compound to be brought into contact with, sodium bisulfite and sulfite ion are preferred.

The concentration and time, at and for which the membrane is brought into contact with the water-soluble compound (II) that reacts with the diazonium salt or a derivative thereof, can be appropriately adjusted so as to obtain the intended effect.

The temperature at which the membrane is brought into contact with the water-soluble compound (II) that reacts with the diazonium salt or a derivative thereof, is preferably from 10 to 90°C. When the temperature is within this range, the reaction smoothly proceeds and at the same time, a decrease in the amount of permeate due to the polymer shrinkage is not caused.

Note that the membranes before and after being subjected to the treatments described in the section (2-3) are all referred to as the "composite semipermeable membrane", and layers on the support layer in the membranes before and after being subjected to the treatments in the section (2-3) are all referred to as the "separation functional layer".

(3) Utilization of Composite Semipermeable Membrane

The composite semipermeable membrane of the present invention produced in this way is suitably used as a spiral-type composite semipermeable membrane element by winding it around a cylindrical water collecting tube perforated with a large number of holes, together with a raw-water channel member such as plastic net and a permeate channel member such as tricot and optionally with a film for enhancing the pressure resistance. Furthermore, the elements can also be connected in series or in parallel and housed in a pressure vessel to configure a composite semipermeable membrane module.

In addition, a fluid separator can be configured by combining the composite semipermeable membrane or its element or module, for example, with a pump for supplying raw water thereto or a device for pretreating the raw water. With use of this fluid separator, water appropriate for the purpose can be obtained by separating raw water into a permeate such as drinking water and a concentrate that has not passed through the membrane.

A higher operating pressure for the fluid separator leads to enhancement of the salt removal performance, but considering that an increase in the operation pressure causes a rise in the energy necessary for the operation and

considering the durability of the composite semipermeable membrane, the operating pressure at the time of passing of water to be treated through the composite semipermeable membrane is preferably 0.5 MPa or more and 10 MPa or less.

The feed water temperature is preferably 5°C or more and 45°C or less, because when it becomes high, the salt removal performance decreases but along with a decline in temperature, the membrane permeation flux decreases. In addition, when the pH of feed water is high, in the case of high-salt-concentration feed water such as seawater, scales of magnesium, etc. may occur and furthermore, high pH operation may cause a deterioration of the membrane. For this reason, operation in a neutral region is preferable.

Examples of the raw water to be treated with the composite semipermeable membrane of the present invention include a liquid mixture containing from 50 mg/L to 100 g/L of salt (Total Dissolved Solids), such as seawater, brackish water and wastewater. In general, the amount of salt indicates a total dissolved solid amount and is represented by "weight/volume" or "weight ratio". According to a definition, it can be calculated from the weight of a residue remaining after a solution is filtered through a 0.45-μm filter and vaporized at a temperature of 39.5 to 40.5°C, but in a simpler way, it is converted from practical salinity (S).

## EXAMPLES

The present invention is described in more detail below by referring to Examples, but the present invention is not limited by the following Examples in any way.

With respect to the composite semipermeable membranes obtained in Examples and Comparative Examples or separation functional layers isolated from the composite semipermeable membranes, the following measurements or equilibration were performed.

(a) Salt Removal Ratio

500 mg/L of a sodium chloride solution adjusted to a pH of 6.5 was supplied to the composite semipermeable membrane at an operating pressure of 0.5 MPa, and the salt concentration in the permeate was measured. The salt removal ratio of the membrane was determined according to the following equation. In addition, the salt removal ratio in the case of re-evaluation after immersion in an aqueous sodium hydroxide solution (pH: 12) at 25°C for 72 hours was measured.

$$\text{Salt removal ratio (\%)} = 100\times\{1-[(\text{salt concentration in permeate})/(\text{salt concentration in feed water})]\}$$

(b) Membrane Permeation Flux

The amount of feed water (sodium chloride solution) permeated through the membrane was converted to the amount ($m^3$) of permeate per 1 $m^2$ of the membrane surface per day to indicate the membrane permeation flux ($m^3/m^2$/day). In addition, the membrane permeation flux in the case of re-evaluation after immersion in an aqueous sodium hydroxide solution (pH: 12) at 25°C for 72 hours was measured.

(c) Equilibration of Composite Semipermeable Membrane

The relative humidity was adjusted under the given temperature condition by using the saturated salt method described in JIS B 7920. The specific procedure is as follows.

200 mL of a saturated solution was put in a container (saturation tank) having a volume of 2.7 L. The composite semipermeable membrane (area: about 2 $cm^2$) having been immersed in water was placed and sealed in wetted state in a manner not contacting with the saturated salt solution and left standing still for 7 days in an incubator at 25°C. In the case of setting the relative humidity to 11.3%, a saturated aqueous solution of lithium chloride was used, and in the case of setting the relative humidity to 97.3%, a saturated aqueous solution of potassium sulfide was used.

(d) Infrared Absorption Spectrum (IR spectrum)

An IR spectrum of the composite semipermeable membrane was obtained by the total reflection infrared spectroscopy (ATR). Specifically, the measurement was performed using Avatar 360 FT-IR spectrometer manufactured by Nicolet Instrument Inc. In addition, as accessories for total reflection measurement, a single reflection type horizontal ATR spectrometer (OMNI-Sampler) and a germanium-made ATR crystal, both of which are manufactured by the same

company, were used.

Immediately after taking out the composite semipermeable membrane from the saturation tank, the IR spectrum of a surface on the separation functional layer side of the composite semipermeable membrane was obtained using the equipment above. In the measurement, the resolution was set to 4 $cm^{-1}$, and the number of times of scanning was set to 256.

The IR spectrum obtained by the operation above was normalized by the absorption peak between 1,690 $cm^{-1}$ and 1,630 $cm^{-1}$ to obtain a differential spectrum.

(e) Measurement of Endothermic Amount by Temperature Modulated DSC method

The substrate was peeled off from the composite semipermeable membrane, and the remaining microporous support layer was removed by extraction with dichloromethane to isolate the separation functional layer. The isolated separation functional layer was analyzed by the temperature modulated DSC method, the endothermic amount (mW) of the irreversible component was measured three times in the range of -20 to 150°C in the initial temperature rise process, and an average value thereof was calculated. Based on the obtained average value, a spectrum such as the one in Fig. 1 was obtained.

From the spectrum, the temperature at which the endothermic amount indicates 1/2 of the peak value (MAX) at -10°C or more and 0°C or less (the temperature at which the endothermic amount reaches 1/2MAX) and the integral value (J/g) of endothermic amounts in the temperature range above (the integral value of the shaded area in Fig. 1) were calculated.

(f) Positron Annihilation Lifetime Measurement by Positron Beam Method

Positron annihilation lifetime measurement of the separation functional layer in the present Examples and Comparative Examples was performed using a positron beam method as follows.

That is, the composite semipermeable membrane was dried at room temperature under reduced pressure and cut into 1.5 cm × 1.5 cm square to obtain a test sample. Using a positron annihilation lifetime measurement apparatus for thin layer equipped with a positron beam generating device (this device is described in detail, for example, in Radiation Physics and Chemistry, 58, 603, Pergamon (2000)) at a beam intensity of 1 keV and room temperature under vacuum, the test sample was measured by a barium difluoride scintillation counter using a photomultiplier tube with a total count of 5 million, and analyzed by POSITRONFIT. The average pore radius was calculated from the average lifetime $\tau$ of the fourth component obtained by analysis.

Based on the average pore radius above, the half width of the absorption beak between 3,900 $cm^{-1}$ and 2,900 $cm^{-1}$ and the value obtained by dividing the absorption intensity area between 3,900 $cm^{-1}$ and 2,900 $cm^{-1}$ by the absorbance of the absorption peak top between 1,690 $cm^{-1}$ and 1,630 $cm^{-1}$, were determined.

(g) Standard Deviation of Height of Convex Parts and Average Height of Convex Parts

With respect to the pleated structure in the separation functional layer, using an electron microscope image of a cross-section at each of arbitrary 10 locations, having the length in the membrane surface direction of the composite semipermeable membrane being 2.0 μm, the standard deviation of the height of convex parts having a height of one fifth or more of the 10-point average surface roughness in the separation functional layer and the average height of the convex parts in the electron microscope image were measured.

The sample for the height measurement of the pleat convex part was prepared by embedding the composite semipermeable membrane into polyvinyl alcohol and staining it with osmium tetroxide. The obtained sample was photographed using TEM (Transmission Electron Microscope) tomography, and the obtained 3D image was analyzed by an analysis software. For the TEM tomography analysis, a field-emission analytical electron microscope JEM2100F manufactured by JEOL Ltd. was used, and an image acquired at a magnification of 300,000 times was used.

(Production Example 1)

A 15.7 wt% DMF solution of polysulfone was cast on a polyester nonwoven fabric (air permeability: from 0.5 to 1 $cc/cm^2/sec$) to a thickness of 200 μm at room temperature (25°C), immediately immersed in pure water and left for 5 minutes to prepare a supporting membrane (thickness: from 210 to 215 μm).

(Example 1)

The supporting membrane obtained in Production Example 1 was immersed in a 1.8 wt% aqueous solution of

m-PDA for 2 minutes, and the supporting membrane was slowly pulled up in the vertical direction. Nitrogen was blown from an air nozzle to remove the excess aqueous solution from the supporting membrane surface, and an n-decane solution at 25°C containing 0.065 wt% of TMC and 0.1 wt% of undecanoic acid was applied to completely wet the surface. Furthermore, after 10 seconds, a 1 wt% n-decane solution of diethylene glycol dimethyl ether (SP value: 7.27) was applied to completely wet the surface, followed by standing still for 1 minute. Next, in order to remove the excess solution from the membrane, the membrane was vertically held for 1 minute to drain the solution, followed by washing with hot water at 80°C for 2 minutes to obtain a composite semipermeable membrane.

(Example 2)

A composite semipermeable membrane was obtained in the same manner as in the method of Example 1 except that the 1 wt% n-decane solution of diethylene glycol dimethyl ether was applied 30 seconds after 0.065 wt% of TMC was applied.

(Example 3)

A composite semipermeable membrane was obtained in the same manner as in the method of Example 1 except that the 1 wt% n-decane solution of diethylene glycol dimethyl ether was changed to a 0.1 wt% n-decane solution of diethylene glycol dimethyl ether.

(Example 4)

A composite semipermeable membrane was obtained in the same manner as in the method of Example 1 except that the undecanoic acid was changed to tridecanoic acid.

(Example 5)

A composite semipermeable membrane was obtained in the same manner as in the method of Example 1 except that the undecanoic acid was changed to hexadecanoic acid.

(Example 6)

A composite semipermeable membrane was obtained in the same manner as in the method of Example 1 except that the undecanoic acid was changed to methyl undecanoate.

(Example 7)

A composite semipermeable membrane was obtained in the same manner as in the method of Example 1 except that the diethylene glycol dimethyl ether was changed to diethylene glycol dibutyl ether (SP value: 7.82).

(Example 8)

A composite semipermeable membrane was obtained in the same manner as in the method of Example 1 except that the n-decane solution at 25°C containing 0.1 wt% of undecanoic acid was changed to an n-decane solution at 25°C containing 0.06 wt% of monohydrolyzed TMC and 0.065 wt% of TMC.

(Comparative Example 1)

The supporting membrane obtained in Production Example 1 was immersed in a 1.8 wt% aqueous solution of m-PDA for 2 minutes, and the supporting membrane was slowly pulled up in the vertical direction. Nitrogen was blown from an air nozzle to remove the excess aqueous solution from the supporting membrane surface, and an n-decane solution at 25°C containing 0.065 wt% of TMC was applied to completely wet the surface, followed by standing still for 1 minute. Next, in order to remove the excess solution from the membrane, the membrane was vertically held for 1 minute to drain the solution, followed by washing with hot water at 80°C for 2 minutes to obtain a composite semipermeable membrane.

(Comparative Example 2)

The composite semipermeable membrane obtained in Comparative Example 1 was immersed in a 15 wt% aqueous solution of glycerin for 30 seconds and the excess aqueous solution was removed from the membrane, followed by drying in hot air at 50°C for 70 seconds to obtain a dried composite semipermeable membrane.

(Comparative Example 3)

A composite semipermeable membrane was obtained in the same manner as in the method of Comparative Example 1 except that the n-decane solution at 25°C containing 0.065 wt% of TMC was changed to an n-decane solution at 25°C containing 0.01 wt% of benzoyl chloride and 0.065 wt% of TMC.

(Comparative Example 4)

A composite semipermeable membrane was obtained in the same manner as in the method of Comparative Example 1 except that the n-decane solution at 25°C containing 0.065 wt% of TMC was changed to an n-decane solution at 25°C containing 0.06 wt% of monohydrolyzed TMC and 0.065 wt% of TMC.

(Comparative Example 5)

A composite semipermeable membrane was obtained in the same manner as in the method of Comparative Example 1 except that the n-decane solution at 25°C containing 0.065 wt% of TMC was changed to an n-decane solution at 25°C containing 1 wt% of diethylene glycol dimethyl ether and 0.065 wt% of TMC.

(Comparative Example 6)

A composite semipermeable membrane was obtained in the same manner as in the method of Comparative Example 1 except that the n-decane solution at 25°C containing 0.065 wt% of TMC was changed to an n-decane solution at 25°C containing 0.1 wt% of diethylene glycol dimethyl ether and 0.065 wt% of TMC.

(Comparative Example 7)

A composite semipermeable membrane was obtained in the same manner as in the method of Comparative Example 1 except that an aqueous solution containing 1.8 wt% of m-PDA and 0.1 wt% of sodium undecanoate was used in place of the 1.8 wt% aqueous solution of m-PDA.

(Comparative Example 8)

A composite semipermeable membrane was obtained in the same manner as in the method of Example 1 except that a 0.1 wt% n-decane solution of undecanoic acid was used in place of the 1 wt% n-decane solution of diethylene glycol dimethyl ether.

(Comparative Example 9)

A composite semipermeable membrane was obtained in the same manner as in the method of Example 1 except that an n-decane solution at 25°C containing 0.065 wt% of TMC and 1 wt% of diethylene glycol dimethyl ether was used in place of the n-decane solution at 25°C containing 0.065 wt% of TMC and 0.1 wt% of undecanoic acid.

(Comparative Example 10)

A composite semipermeable membrane was obtained in the same manner as in the method of Example 1 except that an n-decane solution at 25°C containing 0.065 wt% of TMC and 1 wt% of diethylene glycol dimethyl ether was used in place of the n-decane solution at 25°C containing 0.065 wt% of TMC and 0.1 wt% of undecanoic acid and an n-decane solution containing 0.1 wt% of undecanoic acid was used in place of the n-decane solution at 25°C containing 1 wt% of diethylene glycol dimethyl ether.

(Comparative Example 11)

A composite semipermeable membrane was obtained in the same manner as in the method of Example 1 except that in place of applying an n-decane solution at 25°C containing 0.065 wt% of TMC and 0.1 wt% of undecanoic acid to completely wet the surface and furthermore, after 10 seconds, applying a 1 wt% n-decane solution of diethylene glycol dimethyl ether to completely wet the surface, an n-decane solution at 25°C containing 0.065 wt% of TMC and 0.1 wt% of undecanoic acid was applied to completely wet the surface and furthermore, after 3 seconds, a 1 wt% n-decane solution of diethylene glycol dimethyl ether was applied to completely wet the surface.

(Comparative Example 12)

A composite semipermeable membrane was obtained in the same manner as in the method of Example 1 except that in place of applying an n-decane solution at 25°C containing 0.065 wt% of TMC and 0.1 wt% of undecanoic acid to completely wet the surface and furthermore, after 10 seconds, applying a 1 wt% n-decane solution of diethylene glycol dimethyl ether to completely wet the surface, an n-decane solution at 25°C containing 0.065 wt% of TMC and 0.1 wt% of undecanoic acid was applied to completely wet the surface and furthermore, after 80 seconds, a 1 wt% n-decane solution of diethylene glycol dimethyl ether was applied to completely wet the surface.

The measurement results of each of the composite semipermeable membranes obtained in Examples 1 to 8 and Comparative Examples 1 to 12 are shown in Tables 1 and 2.

[Table 1]

Table 1

| | Half Width (H) of Absorption Peak Between 3900 $cm^{-1}$ and 2900 $cm^{-1}$ | (Absorption Intensity Area Between 3900 $cm^{-1}$ and 2900 $cm^{-1}$)/(Value of Peak Top Between 1690 $cm^{-1}$ and 1630 $cm^{-1}$) (F) | Temperature Modulated DSC method (-10°C or more and 0°C or less) | | Standard Deviation of Height of Convex Parts | Average Height of Convex Parts |
|---|---|---|---|---|---|---|
| | | | Temperature at which Endothermic Amount is 1/2 of Peak Value | Integral Value of Endothermic Amount | | |
| Unit | (-) | (-) | (°C) | (J/g) | (nm) | (nm) |
| Example 1 | 365 | 863 | -4.1 | 245 | 50 | 341 |
| Example 2 | 359 | 857 | -4.0 | 240 | 42 | 320 |
| Example 3 | 359 | 859 | -4.1 | 241 | 44 | 350 |
| Example 4 | 368 | 869 | -3.4 | 252 | 52 | 311 |
| Example 5 | 372 | 874 | -3.1 | 260 | 48 | 368 |
| Example 6 | 356 | 851 | -4.5 | 237 | 51 | 324 |
| Example 7 | 357 | 853 | -3.7 | 230 | 45 | 368 |
| Example 8 | 360 | 861 | -3.9 | 235 | 44 | 351 |
| Comparative Example 1 | 442 | 360 | -6.5 | 185 | 90 | 310 |
| Comparative Example 2 | 451 | 556 | -5.9 | 220 | 69 | 250 |
| Comparative Example 3 | 342 | 468 | -5.5 | 207 | 84 | 245 |
| Comparative Example 4 | 336 | 493 | -6.1 | 210 | 70 | 283 |

(continued)

| | Half Width (H) of Absorption Peak Between 3900 $cm^{-1}$ and 2900 $cm^{-1}$ | (Absorption Intensity Area Between 3900 $cm^{-1}$ and 2900 $cm^{-1}$)/ (Value of Peak Top Between 1690 $cm^{-1}$ and 1630 $cm^{-1}$) (F) | Temperature Modulated DSC method (-10°C or more and 0°C or less) | | Standard Deviation of Height of Convex Parts | Average Height of Convex Parts |
|---|---|---|---|---|---|---|
| | | | Temperature at which Endothermic Amount is 1/2 of Peak Value | Integral Value of Endothermic Amount | | |
| Comparative Example 5 | 428 | 519 | -5.8 | 218 | 65 | 220 |
| Comparative Example 6 | 431 | 483 | -5.7 | 209 | 70 | 210 |
| Comparative Example 7 | 342 | 348 | -5.4 | 220 | 72 | 230 |
| Comparative Example 8 | 336 | 341 | -5.6 | 221 | 60 | 291 |
| Comparative Example 9 | 440 | 521 | -5.8 | 219 | 80 | 90 |
| Comparative Example 10 | 451 | 528 | -5.8 | 200 | 81 | 80 |
| Comparative Example 11 | 471 | 569 | -6.2 | 225 | 78 | 92 |
| Comparative Example 12 | 345 | 360 | -5.5 | 205 | 80 | 240 |

[Table 2]

Table 2

| | Salt Removal Ratio | Membrane Permeation Flux | After Immersion in Aqueous NaOH Solution for 72 Hours | |
|---|---|---|---|---|
| | | | Salt Removal Ratio | Membrane Permeation Flux |
| Unit | (%) | ($m^3/m^2/d$) | (%) | ($m^3/m^2/d$) |
| Example 1 | 98.8 | 1.12 | 98.6 | 1.15 |
| Example 2 | 99.0 | 1.04 | 98.8 | 1.10 |
| Example 3 | 98.9 | 1.05 | 98.7 | 1.04 |
| Example 4 | 98.8 | 1.19 | 98.8 | 1.18 |
| Example 5 | 98.9 | 1.21 | 98.8 | 1.24 |
| Example 6 | 98.8 | 0.99 | 98.5 | 1.10 |
| Example 7 | 99.0 | 1.01 | 98.8 | 1.05 |
| Example 8 | 98.8 | 1.07 | 98.4 | 1.10 |
| Comparative Example 1 | 98.8 | 0.61 | 97.8 | 0.81 |

(continued)

| | Salt Removal Ratio | Membrane Permeation Flux | After Immersion in Aqueous NaOH Solution for 72 Hours | |
|---|---|---|---|---|
| | | | Salt Removal Ratio | Membrane Permeation Flux |
| Comparative Example 2 | 97.6 | 0.89 | 96.5 | 1.10 |
| Comparative Example 3 | 98.0 | 0.79 | 97.0 | 0.95 |
| Comparative Example 4 | 97.9 | 0.82 | 97.0 | 0.99 |
| Comparative Example 5 | 98.3 | 0.85 | 96.5 | 1.21 |
| Comparative Example 6 | 98.5 | 0.81 | 96.5 | 0.99 |
| Comparative Example 7 | 97.0 | 0.78 | 95.8 | 1.10 |
| Comparative Example 8 | 98.8 | 0.66 | 97.2 | 0.82 |
| Comparative Example 9 | 97.2 | 0.34 | 95.7 | 0.51 |
| Comparative Example 10 | 97.2 | 0.41 | 95.0 | 0.55 |
| Comparative Example 11 | 96.0 | 1.39 | 92.9 | 1.72 |
| Comparative Example 12 | 98.8 | 0.62 | 96.5 | 0.82 |

INDUSTRIAL APPLICABILITY

The composite semipermeable membrane of the present invention can be, in particular, suitably used for desalination of seawater or brackish water.

## Claims

**1.** A composite semipermeable membrane, comprising: a supporting membrane having a substrate and a microporous support layer; and a separation functional layer disposed on the microporous support layer,

wherein the separation functional layer contains a crosslinked aromatic polyamide and comprises a thin film having a pleated structure including a plurality of convex parts and concave parts, whereby an average height of the convex parts in an electron microscope image, measured as described in the description, is 100 nm or more and 500 nm or less, and
wherein the separation functional layer is formed on the microporous support layer by the steps including,

(1) a substep of bringing an aqueous polyfunctional amine solution into contact with the microporous support layer,
(2) a substep of, after the substep (1), bringing a solution containing an aliphatic carboxylic acid and a polyfunctional acid halide into contact with the microporous support layer, wherein the aliphatic carboxylic acid includes a linear or branched alkyl group and has 5 or more carbon atoms, and
(3) a substep of bringing a solution containing a compound except for the aliphatic carboxylic acid in the

substep (2) into contact with the microporous support layer after 5 seconds or more and 60 seconds or less from the start of the substep (2), wherein the compound is ethylene glycol ether and has an SP value of 7 $(cal/cm^3)^{1/2}$ or more and 15 $(cal/cm^3)^{1/2}$ or less, and wherein the concentration of the compound in the solution containing the compound is 10 wt.% or less

**characterized in that** the composite semipermeable membrane satisfies the following conditions (A) and (B):

(A) in a differential spectrum Sd obtained by subtracting an infrared absorption (IR) spectrum S2 of a surface on the separation functional layer side of the composite semipermeable membrane in the case of being equilibrated at a temperature of 25°C and a relative humidity of 11.3% RH

from an infrared absorption (IR) spectrum S1 of the surface on the separation functional layer side of the composite semipermeable membrane in the case of being equilibrated at a temperature of 25°C and a relative humidity of 97.3% RH,
a half width H of an absorption peak between 3,900 $cm^{-1}$ and 2,900 $cm^{-1}$ is 355 or more and 373 or less; and

(B) in the infrared absorption (IR) spectrum S1, a value F obtained by dividing an absorption intensity area between 3,900 $cm^{-1}$ and 2,900 $cm^{-1}$ by an absorbance of a peak top between 1,690 $cm^{-1}$ and 1,630 $cm^{-1}$ is 850 or more.

**2.** The composite semipermeable membrane according to claim 1, wherein:

when the separation functional layer is measured by temperature modulated DSC method, the temperature at which an endothermic amount indicates 1/2 of a peak value of an irreversible endothermic amount at -10°C or more and 0°C or less in an initial temperature rise process is in a range of -5°C or more and -2°C or less; and an integral value of the irreversible endothermic amount is 200 J/g or more.

**3.** The composite semipermeable membrane according to claim 1, wherein the crosslinked aromatic polyamide is a polycondensate of metaphenylenediamine and trimesic acid chloride.

**4.** The composite semipermeable membrane according to any one of claims 1 to 3, wherein:

in the electron microscope image of a cross-section at each of arbitrary 10 locations, having a length in a membrane surface direction of the composite semipermeable membrane being 2.0 μm, a standard deviation of the height of convex parts having a height of one fifth or more of a 10-point average surface roughness in the separation functional layer is 60 nm or less; and
the average height of the convex parts in the electron microscope image is 200 nm or more and 500 nm or less.

**5.** A method for producing the composite semipermeable membrane according to any one of claims 1 to 3, the method comprising a step of:

forming the separation functional layer on the microporous support layer,
wherein the step comprises:

(1) a substep of bringing an aqueous polyfunctional amine solution into contact with the microporous support layer,
(2) a substep of, after the substep (1), bringing a solution containing an aliphatic carboxylic acid and a polyfunctional acid halide into contact with the microporous support layer, wherein the aliphatic carboxylic acid includes a linear or branched alkyl group and has 5 or more carbon atoms, and
(3) a substep of bringing a solution containing a compound except for the aliphatic carboxylic acid in the substep (2) into contact with the microporous support layer after 5 seconds or more and 60 seconds or less from the start of the substep (2), wherein the compound is ethylene glycol ether and has an SP value of 7 $(cal/cm^3)^{1/2}$ or more and 15 $(cal/cm^3)^{1/2}$ or less, and wherein the concentration of the compound in the solution containing the compound is 10 wt.% or less.

## Patentansprüche

1. **1.** Semipermeable Verbundmembran, umfassend:

eine Trägermembran mit einem Substrat und einer mikroporösen Trägerschicht, und eine funktionelle Trennschicht, die auf der mikroporösen Trägerschicht angeordnet ist, wobei die funktionelle Trennschicht ein vernetztes aromatisches Polyamid enthält und einen Dünnfilm mit einer gefalteten Struktur mit einer Vielzahl von konvexen Teilen und konkaven Teilen umfasst, wobei die durchschnittliche Höhe der konvexen Teile in einem Elektronenmikroskopbild, gemessen wie in der Beschreibung beschrieben, 100 nm oder mehr und 500 nm oder weniger beträgt, und wobei die funktionelle Trennschicht auf der mikroporösen Trägerschicht durch die folgenden Schritte ausgebildet wird:

(1) einen Teilschritt zum Bringen einer wässrigen polyfunktionalen Aminolösung in einen Kontakt mit der mikroporösen Trägerschicht,
(2) einen Teilschritt zum, nach dem Teilschritt (1), Bringen einer Lösung, die eine aliphatische Carbonsäure und ein polyfunktionales Säurehalogenid enthält, in einen Kontakt mit der mikroporösen Trägerschicht, wobei die aliphatische Carbonsäure eine lineare oder eine verzweigte Alkylgruppe enthält und 5 oder mehr Kohlenstoffatome aufweist, und
(3) einen Teilschritt zum Bringen einer Lösung, die eine Verbindung mit Ausnahme der aliphatischen Carbonsäure in dem Teilschritt (2) enthält, in einen Kontakt mit der mikroporösen Trägerschicht nach 5 Sekunden oder mehr und 60 Sekunden oder weniger ab dem Start des Teilschritts (2), wobei die Verbindung Ethylenglycolether ist und einen Löslichkeitsparameter (SP)-Wert von 7 $(cal/cm^3)^{1/2}$ oder mehr und $15(cal/cm^3)^{1/2}$ oder weniger aufweist, und wobei die Konzentration der Verbindung in der die Verbindung enthaltenden Lösung 10 Gewichtsprozent oder weniger beträgt,

**dadurch gekennzeichnet, dass** die semipermeable Verbundmembran die folgenden Bedingungen (A) und (B) erfüllt:

(A) in einem Differenzspektrum Sd, das durch das Subtrahieren eines Infrarotabsorption (IR)-Spektrum S2 einer Oberfläche der Funktionelle-Trennschicht-Seite der semipermeablen Verbundmembran im Fall einer Äquilibrierung bei einer Temperatur von 25°C und einer relativen Feuchtigkeit von 11,3% RH von einem Infrarotabsorption (IR)-Spektrum S1 der Oberfläche auf der Funktionelle-Trennschicht-Seite der semipermeablen Verbundmembran im Fall einer Äquilibrierung bei einer Temperatur von 25°C und einer relativen Feuchtigkeit von 97,3% RH erhalten wird, die halbe Breite H einer Absorptionsspitze zwischen 3.900 $cm^{-1}$und 2.900 $cm^{-1}$ 355 oder mehr und 373 oder weniger beträgt, und
(B) in dem Infrarotabsorption (IR)-Spektrum S1 ein Wert F, der durch das Dividieren einer Absorptionsintensitätsfläche zwischen 3.900 $cm^{-1}$ und 2.900 $cm^{-1}$ durch eine Absorbanz eines Gipfels zwischen 1.690 $cm^{-1}$ und 1.630 $cm^{-1}$ erhalten wird, 850 oder mehr beträgt.

2. **2.** Semipermeable Verbundmembran nach Anspruch 1, wobei:

wenn die funktionelle Trennschicht durch eine temperaturmodulierte DSC-Methode gemessen wird, die Temperatur, bei der eine endotherme Größe 1/2 eines Spitzenwerts einer irreversiblen endothermen Größe bei -10°C oder mehr und 0° oder weniger in einem anfänglichen Temperaturanstiegsprozess angibt, in einem Bereich von -5°C oder mehr und 0°C oder weniger liegt, und
der Integralwert der irreversiblen endothermen Größe 200 J/g oder mehr beträgt.

3. **3.** Semipermeable Verbundmembran nach Anspruch 1, wobei das vernetzte aromatische Polyamid ein Polykondensat von Metaphenylendiamin und Trimesinsäurechlorid ist.

4. **4.** Semipermeable Verbundmembran nach einem der Ansprüche 1 bis 3, wobei:

in dem Elektronenmikroskopbild eines Querschnitts bei jeder von 10 beliebigen Positionen mit einer Länge in einer Membranflächenrichtung der semipermeablen Verbundmembran von 2,0 μm eine Standardabweichung der Höhe von konvexen Teilen mit einer Höhe von einem Fünftel oder mehr einer 10-Punkte-durchschnittlichen Oberflächenrauheit in der funktionellen Trennschicht 60 nm oder weniger beträgt, und

die durchschnittliche Höhe der konvexen Teile in dem Elektronenmikroskopbild 200 nm oder mehr und 500 nm oder weniger beträgt.

**5.** Verfahren zum Herstellen der semipermeablen Verbundmembran gemäß einem der Ansprüche 1 bis 3, wobei das Verfahren den folgenden Schritt umfasst:

Ausbilden der funktionellen Trennschicht auf der mikroporösen Trägerschicht,
wobei der Schritt umfasst:

(1) einen Teilschritt zum Bringen einer wässrigen polyfunktionalen Aminolösung in einen Kontakt mit der mikroporösen Trägerschicht,
(2) einen Teilschritt zum, nach dem Teilschritt (1), Bringen einer Lösung, die eine aliphatische Carbonsäure und ein polyfunktionales Säurehalogenid enthält, in einen Kontakt mit der mikroporösen Trägerschicht, wobei die aliphatische Carbonsäure eine lineare oder eine verzweigte Alkylgruppe enthält und 5 oder mehr Kohlenstoffatome aufweist, und
(3) einen Teilschritt zum Bringen einer Lösung, die eine Verbindung mit Ausnahme der aliphatischen Carbonsäure in dem Teilschritt (2) enthält, in einen Kontakt mit der mikroporösen Trägerschicht nach 5 Sekunden oder mehr und 60 Sekunden oder weniger ab dem Start des Teilschritts (2), wobei die Verbindung Ethylenglycolether ist und einen Löslichkeitsparameter (SP)-Wert von 7 $(cal/cm^3)^{1/2}$ oder mehr und 15$(cal/cm^3)^{1/2}$ oder weniger aufweist, und wobei die Konzentration der Verbindung in der die Verbindung enthaltenden Lösung 10 Gewichtsprozent oder weniger beträgt.

**Revendications**

**1.** Membrane semi-perméable composite, comprenant : une membrane porteuse ayant un substrat et une couche de support microporeuse ; et une couche fonctionnelle de séparation disposée sur la couche de support microporeuse,

dans laquelle la couche fonctionnelle de séparation contient un polyamide aromatique réticulé et comprend un film mince ayant une structure plissée incluant une pluralité de parties convexes et de parties concaves, moyennant quoi une hauteur moyenne des parties convexes dans une image au microscope électronique, mesurée comme décrit dans la description, est de 100 nm ou plus et de 500 nm ou moins, et
dans laquelle la couche fonctionnelle de séparation est formée sur la couche de support microporeuse par les étapes incluant

(1) une sous-étape consistant à mettre une solution aqueuse d'amine polyfonctionnelle en contact avec la couche de support microporeuse,
(2) une sous-étape consistant, après la sous-étape (1), à mettre une solution contenant un acide carboxylique aliphatique et un halogénure d'acide polyfonctionnel en contact avec la couche de support microporeuse, dans laquelle l'acide carboxylique aliphatique inclut un groupe alkyle linéaire ou ramifié et a 5 atomes de carbone ou plus, et
(3) une sous-étape consistant à mettre une solution contenant un composé, à l'exception de l'acide carboxylique aliphatique dans la sous-étape (2), en contact avec la couche de support microporeuse après 5 secondes ou plus et 60 secondes ou moins à partir du début de la sous-étape (2), dans laquelle le composé est un éther d'éthylène glycol et a une valeur SP de 7 $(cal/cm^3)^{1/2}$ ou plus et de 15 $(cal/cm^3)^{1/2}$ ou moins, et dans laquelle la concentration du composé dans la solution contenant le composé est de 10 % en poids ou moins,

**caractérisée en ce que** la membrane semi-perméable composite satisfait aux conditions (A) et (B) suivantes :

(A) dans un spectre différentiel Sd obtenu en soustrayant un spectre d'absorption infrarouge (IR) S2 d'une surface sur le côté de la couche fonctionnelle de séparation de la membrane semi-perméable composite dans le cas d'un équilibrage à une température de 25 °C et une humidité relative de 11,3 % HR

d'un spectre d'absorption infrarouge (IR) S1 de la surface sur le côté de la couche fonctionnelle de séparation de la membrane semi-perméable composite dans le cas d'un équilibrage à une température de 25 °C et une humidité relative de 97,3 % HR,
une demi-largeur H d'un pic d'absorption entre 3 900 $cm^{-1}$ et 2 900 $cm^{-1}$ est de 355 ou plus et de 373

ou moins ; et

(B) dans le spectre d'absorption infrarouge (IR) S1, une valeur F obtenue en divisant une aire d'intensité d'absorption entre 3 900 $cm^{-1}$ et 2 900 $cm^{-1}$ par une absorbance d'un sommet de pic entre 1 690 $cm^{-1}$ et 1 630 $cm^{-1}$ est de 850 ou plus.

**2.** Membrane semi-perméable composite selon la revendication 1, dans laquelle :

lorsque la couche fonctionnelle de séparation est mesurée par la méthode DSC modulée en température, la température à laquelle une quantité endothermique indique 1/2 d'une valeur de pic d'une quantité endothermique irréversible à -10 °C ou plus et 0 °C ou moins dans un processus d'élévation de température initiale est dans une plage allant de -5 °C ou plus à -2 °C ou moins ; et
une valeur intégrale de la quantité endothermique irréversible est de 200 J/g ou plus.

**3.** Membrane semi-perméable composite selon la revendication 1, dans laquelle le polyamide aromatique réticulé est un polycondensat de métaphénylène-diamine et de chlorure d'acide trimésique.

**4.** Membrane semi-perméable composite selon l'une quelconque des revendications 1 à 3, dans laquelle :

dans l'image au microscope électronique d'une section transversale à chacun de 10 emplacements arbitraires, ayant une longueur dans une direction de surface de membrane de la membrane semi-perméable composite qui est de 2,0 μm, un écart-type de la hauteur de parties convexes ayant une hauteur d'un cinquième ou plus d'une rugosité de surface moyenne sur 10 points dans la couche fonctionnelle de séparation est de 60 nm ou moins ; et
la hauteur moyenne des parties convexes dans l'image au microscope électronique est de 200 nm ou plus et de 500 nm ou moins.

**5.** Procédé de production de la membrane semi-perméable composite selon l'une quelconque des revendications 1 à 3, le procédé comprenant une étape consistant à :

former la couche fonctionnelle de séparation sur la couche de support microporeuse,
dans lequel l'étape comprend :

(1) une sous-étape consistant à mettre une solution aqueuse d'amine polyfonctionnelle en contact avec la couche de support microporeuse,
(2) une sous-étape consistant, après la sous-étape (1), à mettre une solution contenant un acide carboxylique aliphatique et un halogénure d'acide polyfonctionnel en contact avec la couche de support microporeuse, dans lequel l'acide carboxylique aliphatique inclut un groupe alkyle linéaire ou ramifié et a 5 atomes de carbone ou plus, et
(3) une sous-étape consistant à mettre une solution contenant un composé, à l'exception de l'acide carboxylique aliphatique dans la sous-étape (2), en contact avec la couche de support microporeuse après 5 secondes ou plus et 60 secondes ou moins à partir du début de la sous-étape (2), dans lequel le composé est un éther d'éthylène glycol et a une valeur SP de 7 $(cal/cm^3)^{1/2}$ ou plus et de 15 $(cal/cm^3)^{1/2}$ ou moins, et dans lequel la concentration du composé dans la solution contenant le composé est de 10 % en poids ou moins.

Fig. 1

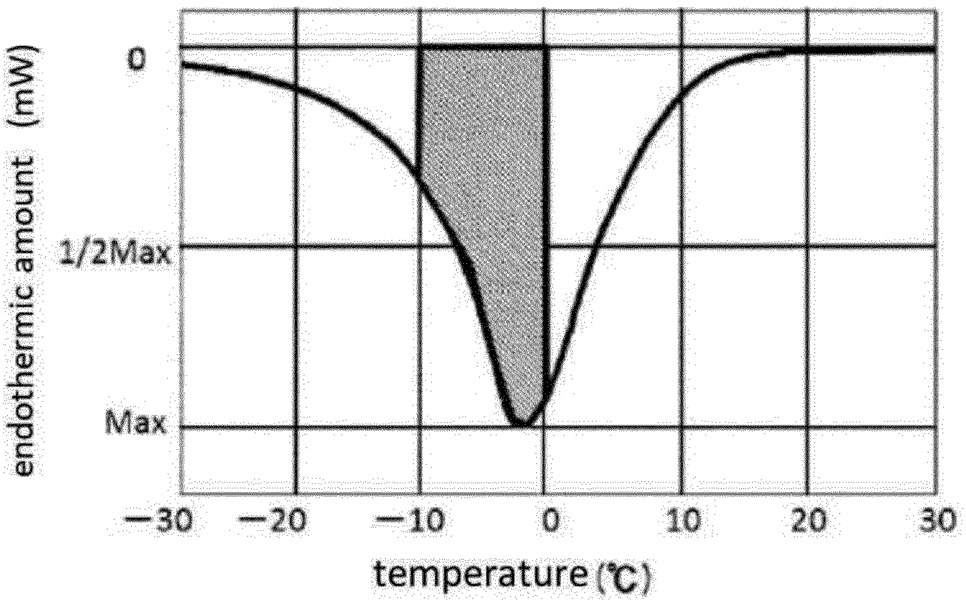
endothermic amount (mW)
0
1/2Max
Max
−30
−20
−10
0
10
20
30
temperature (℃)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8224452 A
- JP 6047260 A
- JP 2014521499 A
- WO 2010120326 A
- US 2015283515 A1
- EP 1157734 A1
- EP 0718029 A2
- EP 1020218 A1
- EP 1707255 A2
- JP H278428 A


### Non-patent literature cited in the description


- *Office of Saline Water Research & Development Progress Report,* 1968
- The Fourth Series of Experimental Chemistry. Chemical Society of Japan, Maruzen Co., Ltd, 1992, vol. 14, 485
- **P. KIERKEGAARD et al.** Computer Physics Communications. North Holland Publishing Co, 1972, vol. 3, 240
- **NAKANISHI et al.** Journal of Polymer Science. John Wiley & Sons, Inc, 1989, vol. 27, 1419
- Radiation Physics and Chemistry. Pergamon, 2000, vol. 58, 603